# EUROPEAN PATENT SPECIFICATION

(11) **EP 2 609 509 B1**
(45) Date of publication and mention of the grant of the patent: **18.07.2018**
(21) Application number: 10860402.6
(22) Date of filing: 24.08.2010
(51) Int. Cl.: G06F 11/36

(54) **SOFTWARE INSTRUMENTATION APPARATUS AND METHOD**
VORRICHTUNG UND VERFAHREN FÜR SOFTWAREINSTRUMENTIERUNG
PROCÉDÉ ET APPAREIL D'INSTRUMENTATION LOGICIELLE

(43) Date of publication of application: 03.07.2013
(73) Proprietor: Pans (UK) Holdings Limited, Road Town, Tortola (VG)
(72) Inventor: YOUNG, Henry, London W4 1RZ (GB); SREEKANTH, Jon, Acton Massachusetts 01720 (US); DHILLON, Robbie, Lincoln Rhode Island 02865 (US)
(74) Representative: London IP Ltd
(86) International application number: PCT/GB2010/051398
(87) International publication number: WO 2012/098341

(56) References cited:
- WO-A2-2005/050372
- US-A1- 2007 214 342
- US-A1- 2008 127 120
- D Waddington ET AL: "Dynamic Analysis and Profiling of Multi-threaded Systems", Designing Software-Intensive Systems: Methods and Principles, 30 April 2008 (2008-04-30), XP55031300, Langston University, OK, Retrieved from the Internet: URL:http://www.dre.vanderbilt.edu/~schmidt /PDF/DSIS_Chapter_Waddington.pdf [retrieved on 2012-06-28]

## Description

The present invention relates to a method and apparatus for monitoring the occurrence of computer software generated events in a system, and particularly relates to providing precise timing and reporting of when such events occur.

The objective of software instrumentation is to record some data associated with a particular event, together with a time stamp reflecting the time at which the event occurred. The existing technique for achieving this is for the application concerned to generate the instrumentation data, make a call to the operating system to fetch the current time, and then to write the instrumentation data and time stamp to some form of persistent storage. This technique has two specific problems.

Firstly, the technology used in modem computer systems to maintain a time-of-day clock, and the means of accessing that information accurately, has not kept pace with the increasing CPU clock speeds, and the rates at which real time events occur. For example, in financial trading applications, real time events can occur at a rate of over 1,000,000 per second, which is one event every 1 microsecond. Standard computer system clocks are typically accurate in the millisecond range, and therefore cannot be used to time stamp high event rates with sufficient discrimination between adjacent events.

The present invention seeks to provide hardware enhanced support for time resolution and accuracy in the 10-100 nanosecond range.

Secondly, using standard computer system clocks for software instrumentation, and dealing with the storage of that information, constitutes a performance overhead which detracts from the primary purpose of any application. When dealing with low rate instrumentation, this is not a problem. However, when dealing with extremely high event rates, the instrumentation workload becomes a significant performance overhead for the application.

The present invention seeks to provide hardware enhanced performance offload, removing from the application the need to request time stamps from the operating system, and the performance overhead of writing the instrumentation data plus time stamp to some form of persistent storage. The present invention further seeks to enable the software instrumentation performance overhead of an application to be very significantly reduced.

Code profiling is a development phase source code optimisation activity. It involves compiling an application's source code using a special feature of the compiler to automatically insert instrumentation code throughout the application. At run time, an application build in such a manner will, in addition to its primary purpose, additionally generate and collate diagnostic information about the proportion of execution time spent in various parts of the code. This is termed execution profiling.

There is one notable problem with code profiling. An application instrumented in this manner runs at a small fraction of the execution speed of a normally compiled application. As a consequence, if the application's purpose is to interact with an external environment of rapidly occurring events (a real time environment), then it will not be able to keep up with the events, and in effect will not function correctly. Any information gathered on the application's performance will therefore be of no use.

A non-patent document by D Waddington and others entitled "Dynamic analysis and profiling of multi -threaded systems" published by Langston University on 30 April 2008 discloses, in section 6 thereof entitled "Hardware Profiling", hardware base profiling, as opposed to program code profiling. This non-patent document, in previous sections, concentrated on modifications to program code (e.g., via instrumentation) or code that implements the execution environment (e.g., VM profiling). Section 6 focuses on hardware-profiling techniques that collect behavioral information in multi- threaded systems. It points out that hardware profiling is typically reserved for embedded and safety-critical system where understanding and ensuring system behavior is of utmost importance. It also points out that although hardware profiling can be relatively costly, it offers advantages over software profiling solutions. The present invention seeks to go beyond the techniques and hardware solutions 30 described.

United States patent application US 2007214342A1 discloses a method, apparatus, and system for monitoring performance within a processing resource, which may be used to modify user-level software. Some embodiments of the invention pertain to an architecture to allow a user to improve software running on a processing resources on a per-thread basis in real-time and without incurring significant processing overhead. The present invention seeks to improve thereover.

International patent application WO2005050372A2 discloses a hardware environment for low-overhead profiling (HELP) technology that reduces profiling overhead and supports runtime system profiling and optimization. HELP utilizes a specifically designed embedded board. An embedded processor on the HELP board offloads tasks of profiling/optimization activities from the host, which reduces system overhead caused by profiling tools and makes HELP especially suitable for continuous profiling on production systems. By processing the profiling data-in parallel and providing feedback promptly, HELP supports on-line optimizations including intelligent prefetching, cache managements, buffer control, security functions and more. The present invention seeks to provide improvemnent thereover.

The present invention seeks to make it possible to build a code profiling system that will, through a significant reduction in the performance penalty of instrumentation, achieve much higher performance levels while generating equivalent execution profiling data.

According to a first aspect, the present invention consists in a computer system, operable to monitor report, store and provide communication of occurrence of events, in the system, the system comprising: one or more a processors, each processor being operable to run an application, each application comprising one or more threads; each application comprising at least one application program interface (API); where each API comprises; means operable to be informed of an event in a thread of the application; the computer system being characterized by comprising: directly effective means, operable in response to the API being informed of the event, to transfer and store data, relevant to the application, in time stamping means; the time stamping means being operable, in response to storage of the data, relevant to the application, to prepare an instrumentation message in the form of a time stamp recorded at the time of storage, the identity of the origin of the data to which the time stamp applies, and the data, relevant to the particular application characterised in that the immediately effective means, operable in response to the API being informed of the event to transfer and store data, relevant to the application, in the time stamping means, includes kernel bypass means, the computer system including a method for monitoring, reporting, storing and providing communication of occurrence of events in an operational processor, the method comprising the steps of a step of running a respective application on each of one or more a processors, each application comprising at least one thread a step of running at least one API on each processor, the API being operable to receive notification of a monitored event in the application ; a step of, in each API, receiving notification occurrence of an event in the application; where on the occurrence of a monitored event, a step of directly transferring to and storing in time stamping means, data, relevant to the application; in the time stamping means, in response to storage of the data, relevant to the application, a step of preparing an instrumentation message in the form of a time stamp recorded at the time of storage, the origin of the data to which the time stamp applies, and the data, relevant to the particular application, the time stamping means being provided as a PCI card employing kernel bypass to transfer and store data, relevant to the application, into the time stamping means.

The invention also provides that the identity of the origin of the data to which the time stamp applies can be an implied identity.

The invention also provides that the time stamping means can be operable to transmit the instrumentation message to a remote monitor for later analysis.

The invention also provides that the system can be operable to execute a plurality of applications or threads; that the time stamping means can comprises clock means; that the time stamping means can comprise a doorbell memory; and that the doorbell memory can be operable to store the data relevant to the particular application or thread in a respective portion of the doorbell memory for the respective one of the plurality of applications or threads.The invention also provides that the clock means can comprise synchronizing means, operable to synchronize the clock means towards agreement with a reference clock.

The invention also provides that the reference clock can be at least one of: a high precision free running clock; a reference clock source accurately representing real world time; and a reference clock source derived from an atomic clock. The invention also provides that the time stamping means can be provided in a PCI card.

The invention also provides that the immediately effective means, operable in response to the API being informed of the event to transfer and store data, relevant to the application, in the time stamping means, can include kernel bypass means.

The invention also provides that the reference clock can be derived from GPS satellite signals.

The invention is further explained, by way of example, by the following description, to be read in conjunction with the appended drawings, in which:
Figure 1 is a block diagram showing a system suitable for use with the invention.
Figure 2 is a block diagram showing the lower half of Figure 1 in more detail.
Figure 3 is a schematic diagram illustrating contents of a processor 12 otherwise shown in Figure 1 and in Figure 2. and
Figure 4 is a flow chart illustrating, in the left hand column, the activity of a process or thread and, in the right hand column, the activity of a time stamping module.

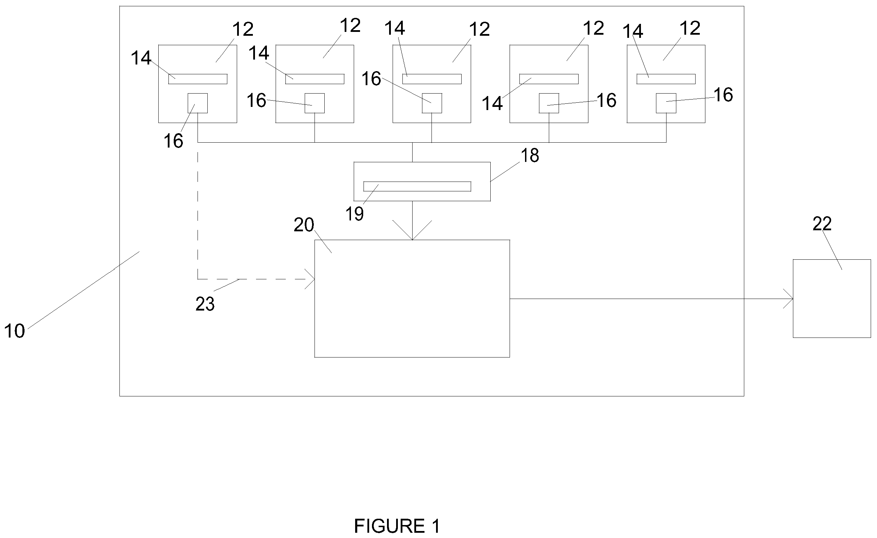

Attention is first drawn to Figure 1, a block diagram showing a system suitable for use within the invention.

Figure 1 illustrates a computer system 10 in which an operating system (not separately illustrated) runs each of a plurality of independent processes 12 each programmed to perform a portion of a collective task. Each process may in turn comprise one or more separate concurrent threads of execution. The independent tasks, in this example, can involve any aspect of trading, ranging, for example, from accessing data, processing data, accessing orders, choosing trading points according to criteria, to executing trades. In other examples, the collective task can involve any aspect of real world interaction where actions and events are required. Each process 12 runs an application, being a single part of the overall operation undertaken by the system 10. The activities of each of the processes 12, when added together, constitute the overall activity of the system 10.

Each process 12 comprises a respective programme application 14 and a respective Application Program Interface (API) 16. An application program interface (API) is an interface implemented by a software component which enables it to interact with other software components. The application 14 performs the business of the process 12 which notifies the API 16 when a monitored event occurs within the respective application 14. API 16 automatically passes the respective relevant data to an allocated portion of a doorbell memory 21 (provided in a hardware module 20), to be stored together with identification of the process (or thread) 12 providing the event recognition trigger and the time, received from a clock in the hardware module 20, that the event was recognized and stored. The information, stored in the hardware module 20, can then later, at a suitable time, be transmitted out of the system 10 for subsequent storage, analysis and assessment in a remote monitor 22. The hardware module 20 thus acts, in part, as a time stamping means.

The hardware module 20 operates with an operating system 18 for the overall system 10, the operating system 18 providing a driver 19 for the hardware and process of the invention. The APIs 16 in the processes 12 each have the capacity (here represented as a single broken line 23) immediately to communicate relevant data from the respective application 14 to the hardware module 20 when the API is notified that a monitored event occurs.

The data relevant to the respective application 14 is written, at the instant of the API 16 is notified of the respective event, directly by the AP1 16, to a memory area termed the doorbell memory 21. The write operation is conducted in a manner such that the data is written by the AP1 16 of the application 14 directly to the physical doorbell memory 21 on the hardware module 20 without involving the use of operating system services, and without requiring any context switch from user mode operation to kernel mode operation. This technique is termed "kernel bypass". There are multiple banks of doorbell memory 21 to enable multiple processes and threads of execution within applications 14 to make use of the hardware module 20 concurrently without requiring the performance overhead of thread synchronisation.

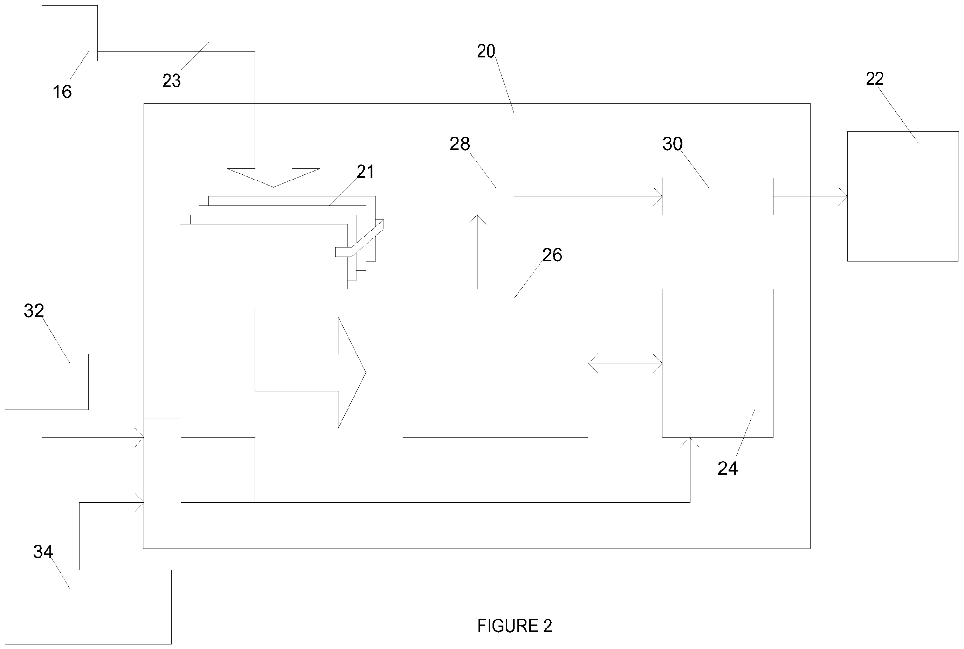

Attention is next drawn to Figure 2, a block diagram showing the lower half of Figure 1 in more detail.

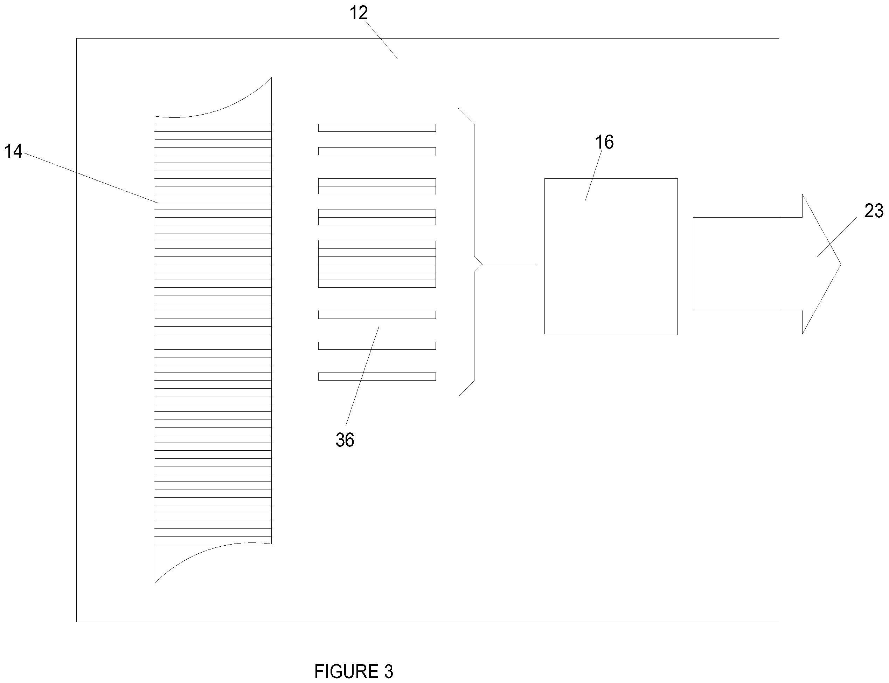

As will become clear when Figure 3 is described hereafter, the API 16 is notified of the occurrence of a monitored event in the application 14 and automatically, at the instant of recognition, transfers relevant data at the time of the occurrence of the event as written data input to the respective allocated portion of the doorbell memory 21 corresponding to the respective process (or thread) 12. At the same time a clock means 24 is triggered by the respective API 16 storing the relevant data to provide and store a measure of the time at which the data storage occurred in the same respective part of the doorbell memory 21 and an identification of the particular process (or thread) 12 providing data, the process indication also being stored in the same respective part of the doorbell memory 21. Thus, almost immediately after detection by the API 16, of a monitored event for a particular process (or thread) 12, relevant data, time of occurrence of storage and identity of the process (or thread) 12 are all stored in order in the part of the doorbell memory 21 relating to that particular process 12. As each process 12 experiences a monitored event, its record is laid down in the hardware module 20.

The hardware module 20 is run by a fast co-processor which, in this embodiment, is embodied as a Field Programmable Gate Array (FPGA) 26 acting at fast, digital logic speeds. Time of storage is immediately stamped for each event. The hardware module 20 can thus transmit data and details at a later, more convenient time, and
independently of any main processor 10 operation, to avoid parasitic use of processor clock cycles, which, in other systems, might have been lost from execution of the application. The data and details are fed through the FPGA 26 to batching means 28 where they are ordered for sending and then put through a protocol assembler 30 into data transfer protocol such as a series of User Datagram Protocol (UDP) or Transmission Control Protocol (TCP) packets to be sent through a network to the monitor 22 outside the system 10.

The clock means 24 is an extremely accurate clock, whose accuracy is further improved by having synchronizing access to an accurate clock source, conveyed using one of a number of possible techniques. A first accurate clock source 32 can be provided using an analogue clock signalling technique such as Pulse Per Second (PPS). A second accurate clock source 34 can be provided using a digital clock signalling technique such as Precision Time Protocol (PTP). The accurate clock sources so provided may in turn be derived from a GPS master clock unit, which includes an accurate satellite time signal transposed to the position of a GPS receiver by calculation to give an accurate time signal at the GPS receiver. By arranging that a GPS receiver can provide time correction signals to the clock means, accurate time keeping and tracking can be assured by the clock means 24.

It is not always necessary for the clock means 24 to maintain absolute correct time for measurements. If the clock means 24 displays a time displacement, it is sufficient for the time displacement to be the same for each instance of time stamping, in which case no consequential differences will be recorded since all clock means 24 displacements are the same. This is particularly of use for running with reference to a free running temperature compensated crystal oscillator clock, where considerable absolute time errors are possible.

Despite the potential time offset errors, the clock means in the present invention can achieve an absolute best time accuracy of +-10.0 nanoseconds. This time accuracy contrasts with the accuracy exhibited by earlier schemes where accuracies as poor as plus or minus 1.0 milliseconds could be experienced.

Attention is next drawn to Figure 3, a schematic diagram illustrating contents of a process 12 otherwise shown in Figure 1 and in Figure 2. As described with reference to. Figure 1, each process 12 embodies the execution of an application 14. The overall system 10 performs a user defined task and each process 12 performs one part of that user defined task. The user has the code that is the application 14 specifically written to perform the required task. Furthermore, the user will have additional code inserted into the application 14 the purpose of which is to detect monitored events and notify the API 16.

When writing and compiling the application 14 using, for example, execution profiling, as described above, one or more areas of the code representing relevant data 36 can be selected. The relevant data 36 is created and collected. When the API 16 is notified of the occurrence of a monitored event, the relevant data 36 is sent, as part of the notification action, to the doorbell memory 21 in the hardware module 20. As an example, relevant data can include, but is not limited to: data values; number of times a resource was accessed; identifying data associated with the event; and a host of other information that might be of use when later analysing the event. As the API 16 executes data transfer, the relevant data 36 is stored with the minimum loss of processor clock cycles and is also time stamped with precision.

Calls to the API 16, which is shown as a separately designated and operating section, can be interspersed inline with the other lines of the code of the application 14. The API 16 is represented as a separate block 16 simply based on its separate purpose from execution of the application 14 and the non application execution related actions it separately executes. The hardware module 20 is preferably provided, in this example, as a PCI local bus card. The hardware module 20 is described herein as a PCI card. It is to be understood that the invention also comprises the hardware module 20 being embodied as any kind of computer hardware sub-system or module, which can be realised in other forms using hardware interfacing or embedding techniques known to an individual who is skilled in the art.

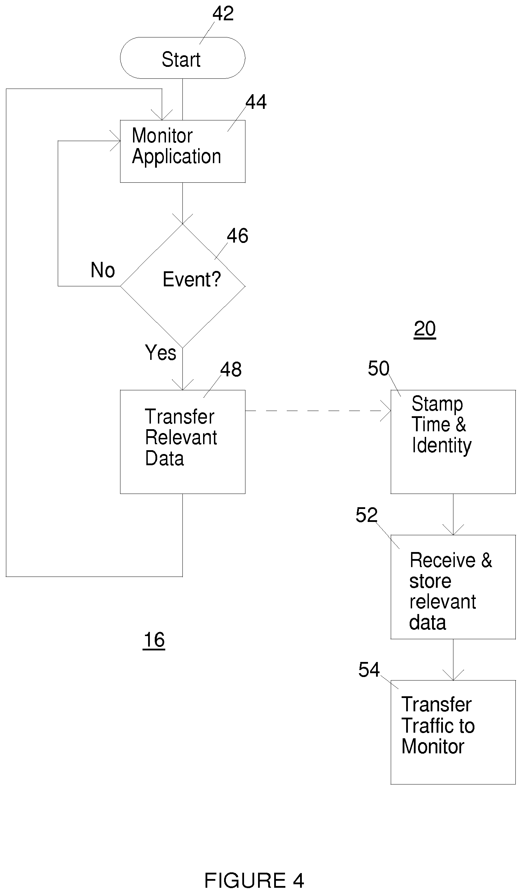

Attention is next drawn to Figure 4, a flow chart illustrating, in the left hand column, the exemplary activity of a process 12 and, in the right hand column, the corresponding activity of the hardware module 20. This explanation shows, as a simple example, one of many ways this aspect of the system can operate.

From a start 42 a first operation 44 in the process monitors the progress of the application to see if a monitored event has occurred. If a first test 46 detects that a monitored event has not occurred, control passes back to the first operation. If the first test 46 detects that the monitored event has occurred, control passes to a second operation 48 where the process notifies the API 16 of the occurrence of the monitored event, passing the relevant data 36 to the hardware module 20. That completed, control is then passed back to the first operation 44 to monitor for the next occasion when the monitored event will occur.

The first thing that the hardware module 20 does in a third operation 50 is to apply and store a time stamp from the clock means 24. This is done first so that there can be least delay between occurrence of the event and its time of occurrence being noted. At the same time, a process (or thread) 12 identifier is generated and stored based on the particular process (or thread) in which the event occurred. Thus, the hardware module 20 first records the time of the event and the identity of the process (or thread) 12 involved.

A fourth operation 52 next receives and stores the relevant data 36 which the process (or thread) 12 has transferred to the hardware module 20.

Later, when the hardware module 20 is ready, a fifth operation 54 is used to transfer the time stamped material, otherwise known as instrumentation data, to the remote monitor 22 for analysis.

In the example given, it is preferred that the number of separate processes (or threads) 12, is no more than sixty four. Thus, the doorbell memory 21 has, in this example, sixty four allocated areas, one for each of the possible processes (or threads) 12. It is to be realised that the invention can also encompass fewer or more that sixty four doorbell memory areas. The invention is more clearly defined by the following claims. Those, skilled in the art, will be aware of variations and modifications which can be applied without departing from the claimed invention.

## Claims

1. A computer system 10, operable to monitor report store and provide communication of occurrence of events in the system, the system 10 comprising:
one or more a processors 12, each processor 12 being operable to run an application 14, each application comprising one or more threads;
each application 14 comprising at least one application program interface (API) 16;
where each API 16 comprises;
means operable to be informed of an event in a thread of the application 14; the computer system being **characterized by** comprising:
directly effective means 20, operable in response to the API 16 being informed of the event, to transfer and store data, relevant to the application 14, in time stamping means 24 21;
the time stamping means 24 21 being operable, in response to storage of the data, relevant to the application, to prepare an instrumentation message in the form of a time stamp recorded at the time of storage, the identity of the origin of the data to which the time stamp applies, and the data, relevant to the particular application
***characterised in that***
the directly effective means, operable in response to the API 16 being informed of the event to transfer and store data, relevant to the application, in the time stamping means, includes kernel bypass means,
the computer system including a method for monitoring, reporting, storing and providing communication of occurrence of events in an operational processor 12, the method comprising the steps of:
a step of running a respective application 14 on each of one or more a processors 12, each application comprising at least one thread;
a step of running at least one application program interface (API) 16 on each processor, the API 16 being operable to receive notification of a monitored event in 20 the application 14;
a step of, in each API 16, receiving notification occurrence of an event in the application;
where on the occurrence of a monitored event, a step of directly transferring to and 25 storing in time stamping means 21 24, data, relevant to the application;
in the time stamping means 21 24, in response to storage of the data, relevant to the application 14, a step of preparing an instrumentation message in the form of a time stamp recorded at the time of storage, the origin of the data to which the time stamp applies, and the data, relevant to the particular application, the time stamping means being provided as a PCI card.
employing kernel bypass to transfer and store data, relevant to the application 14, into the time stamping means 21 24.

2. The system 10 according to Claim 1, wherein the identity of the origin of the data to which the time stamp applies is an implied identity.

3. The system 10 of Claim 1 or 2, wherein the time stamping means 21 24 is operable to transmit the instrumentation message to a remote monitor 22 for later analysis.

4. The system 10 of any of the preceding Claims, wherein;
the system is operable to execute a plurality of applications 14 or threads;
the time stamping means 21 24 comprises clock means 24 32 34; and
the time stamping means 21 24 comprises a doorbell memory 21; wherein the doorbell memory 21 is operable to store the data relevant to the particular application 14 or thread in a respective portion of
the doorbell memory 21 for the respective one of the plurality of applications 14 or threads..

5. The system 10 of Claim 4 wherein the clock means 24 comprises synchronizing means, operable to synchronize the clock means towards agreement with a reference clock 32 34.

6. The system 10 of Claim 5, wherein the reference clock 32 34 is at least one of: a high precision free running clock; a reference clock source accurately representing real world time; and a reference clock source derived from an atomic clock.

7. The system 10, according to any of the preceding claims, wherein the time stamping means 21 24 is provided in a PCI card.

8. The system 10 according to any previous claim wherein the method, includes that the identity of the origin of the data to which the time stamp applies is an implied identity

9. The system 10 according to any previous claim wherein the method includes the step of providing the instrumentation message to a remote monitor 22 for later assessment.

10. The system 10 according to any previous claim wherein the method is for use with a plurality of processors 12, including the steps of:
maintaining a clock 24;
providing a doorbell memory 21; and storing the instrumentation message in a respective portion of the doorbell 5 memory 21 for the respective one of the application 14 of thread in the respective processor..

11. The system 10 of Claim 10, including the step of synchronizing the maintained clock 24 towards agreement with an accurate reference clock 32 34.

12. The system 10 of Claim 11, wherein the accurate clock source 32 34 is at least one of: a high precision free running clock; a reference clock source accurately representing real world time 32; and a reference clock source derived from an atomic clock 34.

## Patentansprüche

1. Ein Computersystem 10, betriebsbereit, einen Berichtsspeicher zu überwachen und Mitteilungen zum Auftreten von Vorfällen im System bereitzustellen, das System 10 umfassend:
Einen oder mehrere Prozessoren 12, jeder Prozessor 12 ist betriebsbereit, eine Anwendung 14 auszuführen, jede Anwendung umfasst einen oder mehrere Threads;
jede Anwendung 14 umfasst mindestens eine Anwendungsprogramm-Schnittstelle (API) 16;
wobei jede API 16 Folgendes umfasst;
Vorrichtung, die betriebsbereit ist, um über einen Vorfall in einem Thread der Anwendung 14 informiert zu werden; das Computersystem ist **gekennzeichnet dadurch, dass** es Folgendes umfasst:
Direkt effektive Vorrichtung 20, die betriebsbereit ist, als Reaktion darauf, dass die API 16 über den Vorfall informiert wird, Daten, die für die Anwendung 14 relevant sind, in eine Zeitstempelvorrichtung 24 21 zu übertragen und zu speichern;
die Zeitstempelvorrichtung 24 21 ist betriebsbereit, als Reaktion auf die Speicherung der Daten, die für die Anwendung relevant sind, eine Instrumentenmeldung in der Form eines Zeitstempels, der zum Zeitpunkt der Speicherung aufgezeichnet wird, die Identität des Ursprungs der Daten, für die der Zeitstempel gilt, und die Daten, die für die bestimmte Anwendung relevant sind, vorzubereiten,
**gekennzeichnet dadurch, dass**
die direkt effektive Vorrichtung, die betriebsbereit ist, als Reaktion darauf, dass die API 16 über den Vorfall informiert wird, Daten, die für die Anwendung relevant sind, in die Zeitstempelvorrichtung zu übertragen und zu speichern, eine Systemkern-Bypassvorrichtung einschließt,
das Computersystem beinhaltet ein Verfahren für die Überwachung, Auswertung, Speicherung und die Bereitstellung einer Meldung über das Auftreten von Vorfällen in einem Betriebsprozessor 12, wobei das Verfahren die folgenden Schritte umfasst:
Einen Schritt der Ausführung einer entsprechenden Anwendung 14 auf jedem des einen oder der mehreren Prozessoren 12, wobei jede Anwendung mindestens einen Thread umfasst;
einen Schritt der Ausführung mindestens einer Anwendungsprogramm-Schnittstelle (API) 16 auf jedem Prozessor, die API 16 ist betriebsbereit, eine Benachrichtigung zu einem überwachten Vorfall an 20 der Anwendung 14 zu empfangen;
einen Schritt, in jeder API 16, eine Benachrichtigung über das Auftreten eines Vorfalls in der Anwendung zu empfangen;
bei Auftreten eines überwachten Vorfalls, ein Schritt einer direkten Übertragung zu und 25 Speicherung in der Zeitstempelvorrichtung 21 24, von Daten, die für die Anwendung relevant sind;
in der Zeitstempelvorrichtung 21 24, als Reaktion auf die Speicherung der Daten, die für die Anwendung 14 relevant sind, ein Schritt der Vorbereitung einer Instrumentenmeldung in der Form eines Zeitstempels, der zum Zeitpunkt der Speicherung aufgezeichnet wird, des Ursprungs der Daten, für die der Zeitstempel gilt, und der Daten, die für die bestimmte Anwendung relevant sind, die Zeitstempelvorrichtung wird dabei als PCI-Karte bereitgestellt.
Anwenden des Systemkern-Bypass, um Daten, die für die Anwendung 14 relevant sind, in die Zeitstempelvorrichtung 21 24 zu übertragen und zu speichern.

2. Das System 10 nach Anspruch 1, wobei die Identität des Ursprungs der Daten, für die der Zeitstempel gilt, eine implizierte Identität ist.

3. Das System 10 nach Anspruch 1 oder 2, wobei die Zeitstempelvorrichtung 21 24 betriebsbereit ist, die Instrumentenmeldung an einen Remote-Monitor 22 für eine spätere Analyse zu übertragen.

4. Das System 10 eines der vorhergehenden Ansprüche, wobei gilt;
Das System ist betriebsbereit, um eine Vielzahl von Anwendungen 14 oder Threads auszuführen;
die Zeitstempelvorrichtung 21 24 umfasst eine Zeitmessvorrichtung 24 32 34; und
die Zeitstempelvorrichtung 21 24 umfasst einen Türklingel-Speicher 21;
wobei der Türklingel-Speicher 21 betriebsbereit ist, die Daten zu speichern, die für die bestimmte Anwendung 14 oder den Thread in einem entsprechenden Teil des Türklingel-Speichers 21 für die entsprechende eine oder die Vielzahl von Anwendungen 14 oder Threads relevant sind.

5. Das System 10 nach Anspruch 4, wobei die Zeitmessvorrichtung 24 eine Synchronisierungsvorrichtung umfasst, die betriebsbereit ist, die Zeitmessvorrichtung zu synchronisieren, damit sie mit einem Referenz-Zeitmesser 32 34 übereinstimmt.

6. Das System 10 nach Anspruch 5, wobei der Referenz-Zeitmesser 32 34 einer der folgenden ist: ein freischwingender Hochpräzisions-Zeitmesser; eine Referenz-Zeitmessquelle, die die echte Weltzeit genau darstellt; und eine Referenz-Zeitmessquelle, die von einer Atomuhr abgeleitet ist.

7. Das System 10 nach einem der vorhergehenden Ansprüche, wobei die Zeitstempelvorrichtung 21 24 in einer PCI-Karte bereitgestellt wird.

8. Das System 10 nach einem der vorhergehenden Ansprüche, wobei das Verfahren einschließt, dass die Identität des Ursprungs der Daten, für die der Zeitstempel gilt, eine implizierte Identität ist.

9. Das System 10 nach einem der vorhergehenden Ansprüche, wobei das Verfahren den Schritt einschließt, die Instrumentenmeldung einem Remote-Monitor 22 für eine spätere Bewertung bereitzustellen.

10. Das System 10 nach einem der vorhergehenden Ansprüche, wobei das Verfahren für die Nutzung in einer Vielzahl von Prozessoren 12 vorgesehen ist, einschließlich der folgenden Schritte:
Führen einer Uhr 24;
Bereitstellen eines Türklingel-Speichers 21; und Speichern der Instrumentenmeldung in einem entsprechenden Teil des Türklingel 5 -Speichers 21 für die jeweilige Anwendung 14 des Thread in dem entsprechenden Prozessor.

11. Das System 10 nach Anspruch 10, das den Schritt umfasst, die geführte Uhr 24 zu synchronisieren, damit sie mit einer genauen Referenzuhr 32 34 übereinstimmt.

12. Das System 10 nach Anspruch 11, wobei die genaue Zeitmessquelle 32 34 mindestens eine der folgenden ist: ein freischwingender Hochpräzisions-Zeitmesser; eine Referenz-Zeitmessquelle, die die echte Weltzeit 32 genau darstellt; und eine Referenz-Zeitmessquelle, die von einer Atomuhr 34 abgeleitet ist.

## Revendications

1. Système informatique 10, actionnable pour contrôler le stockage de rapports et permettre la communication d'occurrence d'événements dans le système, ce système 10 comprenant :
un ou plusieurs processeurs 12, chaque processeur 12 étant actionnable pour exécuter une application 14, chaque application comprenant un ou plusieurs fils ;
chaque application 14 comprenant au moins une interface de programme d'application (API) 16 ;
sachant que chaque API 16 comprend :
un moyen actionnable pour être informé d'un événement dans un fil de l'application 14 ; le système informatique étant **caractérisé en ce qu'**il comprend :
un moyen directement efficace 20, actionnable en réaction à l'API 16 qui est informé de l'événement pour transférer et stocker des données concernant l'application 14 dans un moyen d'horodatage 24 21 ;
le moyen d'horodatage 24 21 étant actionnable, en réaction au stockage des données concernant l'application, pour préparer un message d'instrumentation sous la forme d'un horodatage enregistré à l'heure de stockage, l'identité de l'origine des données auxquelles l'horodatage s'applique et les données concernant l'application particulière,
**caractérisé en ce que**
le moyen directement efficace actionnable en réaction à l'API 16 qui est informé de l'événement pour transférer et stocker les données concernant l'application dans le moyen d'horodatage comprend un moyen de contournement de noyau,
le système informatique comprenant un procédé de contrôle, d'établissement de rapports, de stockage et d'établissement de communication d'occurrence d'événements dans un processeur opérationnel 12, ce procédé comprenant les étapes suivantes :
une étape d'exécution d'une application respective 14 sur chacun d'un ou plusieurs processeurs 12, chaque application comprenant au moins un fil ;
une étape d'exécution d'au moins une interface de programme d'application (API) 16 sur chaque processeur, l'API 16 étant exécutable pour recevoir la notification d'un événement contrôlé dans 20 l'application 14 ;
une étape, dans chaque API 16, de réception d'une occurrence de notification d'un événement dans l'application ;
dans lequel, à l'occurrence d'un événement contrôlé, une étape de transfert direct à et 25 de stockage dans un moyen d'horodatage 21 24 de données concernant l'application ;
dans le moyen d'horodatage 21 24, en réaction au stockage des données concernant l'application 14, une étape de préparation d'un message d'instrumentation sous la forme d'un horodatage enregistré à l'heure de stockage, de l'origine des données auxquelles l'horodatage s'applique et des données concernant l'application particulière, le moyen d'horodatage étant prévu sous forme d'une carte PCI,
l'emploi d'un contournement de noyau pour transférer et stocker des données concernant l'application 14 dans le moyen d'horodatage 21 24.

2. Système 10 selon la revendication 1, dans lequel l'identité de l'origine des données auxquelles l'horodatage s'applique est une identité implicite.

3. Système 10 selon la revendication 1 ou 2, dans lequel le moyen d'horodatage 21 24 est actionnable pour transmettre le message d'instrumentation à un moniteur distant 22 pour analyse ultérieure.

4. Système 10 selon l'une quelconque des revendications précédentes, dans lequel :
le système est actionnable pour exécuter une pluralité d'applications 14 ou de fils ;
le moyen d'horodatage 21 24 comprend un moyen à horloge 24 32 34 ; et
le moyen d'horodatage 21 24 comprend une mémoire de sonnette 21 ;
dans lequel système la mémoire de sonnette 21 est actionnable pour stocker les données concernant l'application particulière 14 ou le fil dans une section respective de la mémoire de sonnette 21 pour l'application ou le fil respectif parmi la pluralité d'applications 14 ou de fils.

5. Système 10 selon la revendication 4 dans lequel le moyen à horloge 24 comprend un moyen de synchronisation actionnable pour synchroniser le moyen à horloge pour l'amener en concordance avec une horloge de référence 32 34.

6. Système 10 selon la revendication 5, dans lequel l'horloge de référence 32 34 est une horloge parmi une horloge à fonctionnement libre de haute précision ; une source d'horloge de référence indiquant précisément l'heure mondiale réelle ; et une source d'horloge de référence dérivée d'une horloge atomique.

7. Système 10, selon l'une quelconque des revendications précédentes, dans lequel le moyen d'horodatage 21 24 est prévu dans une carte PCI.

8. Système 10 selon l'une quelconque des revendications précédentes, dans lequel le procédé prévoit que l'identité de l'origine des données auxquelles l'horodatage s'applique est une identité implicite.

9. Système 10 selon l'une quelconque des revendications précédentes, dans lequel le procédé comprend l'étape de délivrance du message d'instrumentation à un moniteur distant 22 pour évaluation ultérieure.

10. Système 10 selon l'une quelconque des revendications précédentes, dans lequel le procédé est destiné à être utilisé avec une pluralité de processeurs 12, en incluant les étapes suivantes :
mise à niveau d'une horloge 24 ;
prévision d'une mémoire de sonnette 21 ; et stockage du message d'instrumentation dans une section respective de la mémoire 21 de sonnette 5 pour l'application 14 ou le fil respectif dans le processeur respectif.

11. Système 10 selon la revendication 10, comprenant l'étape de synchronisation de l'horloge mise à niveau 24 pour l'amener en concordance avec une horloge de référence précise 32 34.

12. Système 10 selon la revendication 11, dans lequel la source d'horloge précise 32 34 est au moins une horloge parmi une horloge à fonctionnement libre de haute précision ; une source d'horloge de référence indiquant précisément l'heure mondiale réelle 32 ; et une source d'horloge de référence dérivée d'une horloge atomique 34.
